# EUROPÄISCHE PATENTSCHRIFT

(11) **EP 2 265 492 B1**
(45) Veröffentlichungstag und Bekanntmachung des Hinweises auf die Patenterteilung: **02.04.2014**
(21) Anmeldenummer: 09735007.8
(22) Anmeldetag: 23.04.2009
(51) Int. Cl.: B64C 1/12, B64D 11/00, B64D 11/06, B64C 1/06, B64C 1/14

(54) **BEFESTIGUNGSSYSTEM SOWIE VERFAHREN ZUM BEFESTIGEN EINES ELEMENTS EINER FLUGZEUGINNENAUSSTATTUNG**
FASTENING SYSTEM AND METHOD FOR FASTENING AN ELEMENT OF AIRPLANE INTERIOR EQUIPMENT
SYSTEME DE FIXATION ET PROCEDE DE FIXATION D'UN ELEMENT D'UN EQUIPEMENT INTERIEUR D'AVION

(30) Priorität: 25.04.2008 DE 102008020789; 25.04.2008 US 125495
(43) Veröffentlichungstag der Anmeldung: 29.12.2010
(73) Patentinhaber: Airbus Operations GmbH, 21129 Hamburg (DE)
(72) Erfinder: HERZOG, Mark, 22885 Barsbüttel (DE); HUMFELDT, Dirk, 22607 Hamburg (DE); SCHNEIDER, Uwe, 21635 Jork Königreich (DE); THOMASCHEWSKI, Oliver, 22339 Hamburg (DE)
(74) Vertreter: Kopf, Korbinian Paul
(86) Internationale Anmeldenummer: PCT/EP2009/054872
(87) Internationale Veröffentlichungsnummer: WO 2009/130268

(56) Entgegenhaltungen:
- WO-A-99/17958
- DE-A1- 10 220 808
- DE-A1-102006 016 509
- DE-B3-102005 030 997
- US-A- 2 275 683

## Beschreibung

### Gebiet der Erfindung

Die Erfindung betrifft die Befestigung von Inneneinrichtungen in Flugzeugen. Insbesondere betrifft die Erfindung eine Arretierungsvorrichtung zum lösbaren Verbinden einer Komponente mit einer zweiten Komponente, ein Befestigungssystem zum Befestigen eines Elementes einer Flugzeuginnenausstattung an einer Flugzeugstruktur, ein Verfahren zum Befestigen eines Elementes einer Flugzeuginnenausstattung an einer tragenden Struktur in einem Flugzeug, ein Verfahren zum Entfernen eines Elementes einer Flugzeuginnenausstattung von einer tragenden Struktur in einem Flugzeug, ein Flugzeug mit einem erfindungsgemäßen Befestigungssystem sowie die Verwendung eines erfindungsgemäßen Befestigungssystems in einem Flugzeug.

### Hintergrund der Erfindung

Herkömmliche Befestigungssysteme zum Befestigen eines Elementes einer Flugzeuginnenausstattung an einer Flugzeugstruktur zeichnen sich durch das sichere Halten des Elementes aus und ermöglichen gleichzeitig einen einfachen Zugriff. Herkömmliche Befestigungssysteme weisen jedoch eine stark eingeschränkte Funktionalität insbesondere während der Montage auf.

Ein Befestigungssystem ist aus der Offenlegungsschrift DE 102 20 808 A1 bekannt, die den nächstliegenden Stand der Technik darstellt und den Oberbegriff des Anspruchs 1 offenbart.

### Zusammenfassung der Erfindung

Es ist eine Aufgabe der Erfindung, ein benutzerfreundliches Befestigungssystem mit vereinfachter Montagemöglichkeit bereitzustellen.

Diese Aufgabe wird durch eine Arretierungsvorrichtung zum lösbaren Verbinden einer ersten Komponente mit einer zweiten Komponente, durch ein Befestigungssystem zum Befestigen eines Elementes einer Flugzeuginnenausstattung an einer Flugzeugstruktur, durch ein Verfahren zum Befestigen eines Elementes einer Flugzeuginnenausstattung an einer tragenden Struktur in einem Flugzeug, durch ein Verfahren zum Entfernen eines Elementes einer Flugzeuginnenausstattung von einer tragenden Struktur in einem Flugzeug, durch ein Flugzeug mit einem erfindungsgemäßen Befestigungssystem sowie durch die Verwendung eines erfindungsgemäßen Befestigungssystems in einem Flugzeug mit den Merkmalen gemäß den unabhängigen Patentansprüchen 1, 14, 15 und 17 gelöst.

Gemäß einem exemplarischen Ausführungsbeispiel der vorliegenden Erfindung ist eine Arretierungsvorrichtung zum lösbaren Verbinden einer ersten Komponente mit einer zweiten Komponente in einem Flugzeug geschaffen, die Arretierungsvorrichtung aufweisend ein Arretierungselement, befestigbar an einer ersten Komponente, ein Auslöseelement sowie ein Sicherungselement, wobei das Arretierungselement durch das Auslöseelement in einem ersten Zustand lösbar festlegbar ist, wobei das Arretierungselement durch das Sicherungselement in einem zweiten Zustand lösbar festlegbar ist, wobei durch die Betätigung des Auslöseelementes das Arretierungselement vom ersten Zustand in den zweiten Zustand überführbar ist und wobei durch Betätigen des Sicherungselementes das Arretierungselement vom zweiten Zustand in den ersten Zustand überführbar ist.

Gemäß einem weiteren exemplarischen Ausführungsbeispiel der vorliegenden Erfindung ist ein Befestigungssystem zum Befestigen eines Elementes einer Flugzeuginnenausstattung an einer Flugzeugstruktur geschaffen, das Befestigungssystem aufweisend ein Element einer Flugzeuginnenausstattung, eine erste erfindungsgemäße Arretierungsvorrichtung, welche fest mit dem Element der Flugzeuginnenausstattung oder der Flugzeugstruktur gekoppelt ist, eine zweite Arretierungsvorrichtung, welche fest mit dem Element der Flugzeuginnenausstattung oder der Flugzeugstruktur gekoppelt ist, eine erste Fixierungsvorrichtung, welche mit der ersten Arretierungsvorrichtung korrespondiert und fest mit der Flugzeugstruktur oder dem Element der Flugzeuginnenausstattung gekoppelt ist, und eine zweite Fixierungsvorrichtung, welche mit der zweiten Arretierungsvorrichtung korrespondiert und fest mit der Flugzeugstruktur oder dem Element der Flugzeuginnenausstattung gekoppelt ist, wobei die erste Arretierungsvorrichtung und die erste Fixierungsvorrichtung lösbar fest koppelbar sind, wobei die zweite Arretierungsvorrichtung und die zweite Fixierungsvorrichtung lösbar fest koppelbar sind und wobei zumindest eine der ersten und der zweiten Arretierungsvorrichtung einen ersten Teilbereich, welcher erste Teilbereich mit der ersten bzw. zweiten Fixierungsvorrichtung koppelbar ist, und einem zweiten Teilbereich, welcher zweite Teilbereich mit dem Element der Flugzeuginneneinrichtung fest verbindbar ist, aufweist, und wobei die zumindest eine der ersten und der zweiten Arretierungsvorrichtung (4a,b), aufweisend den ersten und zweiten Teilbereich (7a,b), ausgebildet ist, das Element der Flugzeuginnenausstattung (2) relativ zu der ersten bzw. zweiten Fixierungsvorrichtung (3a,b) zu verschwenken.

Gemäß einem weiteren exemplarischen Ausführungsbeispiel der vorliegenden Erfindung wird ein Verfahren zum Befestigen eines Elementes einer Flugzeuginnenausstattung an einer tragenden Struktur in einem Flugzeug bereitgestellt, aufweisend die Schritte Verbinden des Elementes der Flugzeuginnenausstattung unter Verwendung einer ersten Arretierungsvorrichtung an einer ersten Fixierungsvorrichtung, Verschwenken des Elementes der Flugzeuginnenausstattung relativ zur tragenden Struktur und Verbinden des Elementes der Flugzeuginnenausstattung unter Verwendung einer zweiten Arretierungsvorrichtung an einer zweiten Fixierungsvorrichtung, wodurch das Element der Flugzeuginnenausstattung relativ zur tragenden Struktur festgelegt wird.

Gemäß einem weiteren exemplarischen Ausführungsbeispiel der vorliegenden Erfindung wird ein Verfahren zum Entfernen eines Elementes einer Flugzeuginnenausstattung von einer tragenden Struktur in einem Flugzeug angezeigt, aufweisend die Schritte manuelles Lösen der ersten oder der zweiten Arretierungsvorrichtung, Verschwenken des Elementes der Flugzeuginnenausstattung relativ zur tragenden Struktur und manuelles Lösen der verbleibenden zweiten oder ersten Arretierungsvorrichtung.

Gemäß eines weiteren exemplarischen Ausführungsbeispiels der vorliegenden Erfindung wird ein Flugzeug mit einem erfindungsgemäßen Befestigungssystem angezeigt.

Gemäß einem weiteren exemplarischen Ausführungsbeispiel der vorliegenden Erfindung wird die Verwendung eines erfindungsgemäßen Befestigungssystems in einem Flugzeug angezeigt.

Anschaulich ist gemäß einem exemplarischen Ausführungsbeispiel der vorliegenden Erfindung ein Befestigungssystem für ein Element einer Flugzeuginnenausstattung an der tragenden Flugzeugstruktur beschrieben.

Als Element der Flugzeuginnenausstattung mag hierbei jedwede Komponente verstanden werden, bei der ein Bedarf besteht, sie in Relation zur Flugzeugstruktur im Inneren des Flugzeugs im Wesentlichen spielfrei festzulegen.

Dies mag in diesem Zusammenhang beispielsweise eine Gepäckaufbewahrungsmöglichkeit, ein so genannter Overhead Bin sein. Als solche Staubereiche werden Aufbewahrungsmöglichkeiten im Wesentlichen im Kopfbereich bzw. in der Crown Area der Flugzeugstruktur verstanden.

Sie ermöglichen den Passagieren, aber auch den Grewmitgliedern, auf einfache, leicht zugängliche Weise Gepäck oder anderes wichtiges Material wie Decken, Erste-Hilfe-Ausstattung, Sauerstoff-Notfallgeräte etc. aufzubewahren und in einfachem, schnellem Zugriff zu halten.

Jedoch mögen auch weitere Einrichtungsgegenstände in einem Flugzeug hierunter verstanden werden, wie allgemein gesprochen Monumente der Flugzeuginnenausstattung, zum Beispiel Toilettenbereiche in einem Flugzeug oder aber auch Einrichtungsgegenstände der Flugzeuggalley, wie zum Beispiel Schränke mit Warmhaltevorrichtungen bzw. Vorrichtungen für die Zubereitung von Speisen und Getränken wie z.B. Kaffee, Staubereiche für Trollys, Crew Rest Compartments.

Oder aber es mögen sogar die Verkleidungen der Flugzeugstruktur selbst hierunter verstanden werden, wie Verkleidungspaneele, Trennwände, Zwischenwände mit gegebenenfalls Sicherheitstüren oder aber auch einfache Flugzeugsitze, je nach Klassenausstattung als Economy-, Business- oder First Class-Sitze ausgebildet.

Um eine ausreichend sichere und spielfreie Befestigung zu gewährleisten, wird das jeweilige Element der Flugzeuginnenausstattung an zumindest zwei unterschiedlichen Punkten an der tragenden Struktur im Flugzeug befestigt.

Hierzu mögen beispielsweise Doppel-T-Träger als Montageschienen verwendet werden, die großflächig oder zumindest großzügig abschnittsweise an der Flugzeugstruktur bzw. am Flugzeugrumpf befestigt sind.

Diese Träger, auch Tracks genannt, weisen hierbei ihrerseits Befestigungsmöglichkeiten auf, die mit weiteren Arretierungsvorrichtungen bzw. Befestigungssystemen korrespondieren und so eine sichere und im Wesentlichen spielfreie Befestigung ermöglichen.

Spielfrei in diesem Zusammenhang mag als zwar im Wesentlichen fest zur Flugzeugstruktur fixiert verstanden werden, ermöglicht jedoch selbstverständlich minimale Bewegungen, um gegebenenfalls auftretende Lasten durch Vibration bzw. Spannungen, die z.B. in der Flugzeughülle auftreten, beschädigungsfrei zu überstehen.

Weiterhin sind auch einzelne Montageelemente denkbar, welche punktweise an der Flugzeugstruktur befestigbar sind und eine entsprechende Befestigungsmöglichkeit aufweisen.

Besonderes Augenmerk ist hierbei auf eine einfache, unkomplizierte und schnelle Montage gerichtet.

So ist es möglich, während der erstmaligen Einrichtung des Flugzeugs in der Montagehalle die jeweiligen Elemente der Flugzeuginneneinrichtung auf schnelle und unkomplizierte Weise mit minimalem Personalaufwand zu befestigen.

Ebenso ist es denkbar, aufgrund der einfachen Befestigungs- und im Gegenzug auch Demontagemöglichkeiten der vorliegenden Erfindung gegebenenfalls eine kurzfristige Umrüstung der Flugzeuginneneinrichtung zum Beispiel zwischen zwei Flügen oder über Nacht zu ermöglichen.

Das Element der Flugzeuginnenausstattung wird hierbei zuerst an einem der zumindest zwei Tracks bzw. einem ersten Befestigungspunkt befestigt. Eine gelenkige bzw. verschwenkbare Befestigung am ersten Track ermöglicht nun nachfolgend eine schwenkbare Montage, wobei im Weiteren das Element der Flugzeuginnenausstattung an einem zweiten Track bzw. einem zweiten Befestigungspunkt über eine zweite Arretierungsvorrichtung lösbar befestigt wird.

Durch diese einschwenkende oder verschwenkende, sich versetzende Montagebewegung ist ein optimaler Zugriff zu jedem Zeitpunkt des Montagevorganges auf das Element bzw. auf die Flugzeugstruktur mit ihren tragenden Tracks gewährleistet.

Als weitere Besonderheit mag hierbei die automatische, benutzerunabhängige Arretierung der Arretierungsvorrichtungen angesehen werden, die bei Montage eine einfache, unkomplizierte und vor allem sichere und reproduzierbare Arretierung des Elementes der Flugzeuginnenausstattung an der Flugzeugstruktur über die zumindest zwei Tracks gewährleistet.

So kann eine Montage im Wesentlichen schnell und sicher auch von möglicherweise kurzfristig ausgebildetem Hilfspersonal durchgeführt werden.

Weitere exemplarische Ausgestaltungen der vorliegenden Erfindung ergeben sich aus den abhängigen Ansprüchen.

Im Weiteren werden Ausgestaltung der erfindungsgemäßen Arretierungsvorrichtung zum lösbaren Verbinden einer ersten Komponente mit einer zweiten Komponente beschrieben. Diese Ausführungen betreffen jedoch ebenso für das Befestigungssystem zum Befestigen eines Elementes einer Flugzeuginnenausstattung an einer Flugzeugstruktur, für das Verfahren zum Befestigen eines Elementes einer Flugzeuginnenausstattung an einer tragenden Struktur in einem Flugzeug, für das Verfahren zum Entfernen eines Elementes einer Flugzeuginnenausstattung von einer tragenden Struktur in einem Flugzeug, für das Flugzeug mit einem erfindungsgemäßen Befestigungssystem sowie für die Verwendung eines erfindungsgemäßen Befestigungssystems in einem Flugzeug.

Gemäß einem weiteren Ausführungsbeispiel der vorliegenden Erfindung ist eine Vorrichtung geschaffen, die Vorrichtung weiterhin aufweisend ein Gehäuse, wobei das Gehäuse eine erste Öffnung aufweist, durch welche erste Öffnung eine erste Fixierungsvorrichtung, befestigbar an einer zweiten Komponente, in die Arretierungsvorrichtung einbringbar ist, wobei durch das Einbringen der ersten Fixierungsvorrichtung in die Arretierungsvorrichtung das Arretierungselement vom ersten Zustand in den zweiten Zustand überführbar ist und wobei im zweiten Zustand die erste Fixierungsvorrichtung und die Arretierungsvorrichtung relativ zueinander festlegbar sind.

Hierbei mag durch einfaches Einbringen der ersten Fixierungsvorrichtung in die Arretierungsvorrichtung eine im Wesentlichen automatische Befestigung erfolgen. Im eingebrachten Zustand mag das Arretierungselement ausgelöst und von seinem ersten Zustand in den zweiten Zustand übergeführt werden. Im zweiten Zustand greift das Arretierungselement und die Fixierungsvorrichtung derart zusammen, dass die Fixierungsvorrichtung und die Arretierungsvorrichtung zueinander im Wesentlichen spielfrei befestigt sind.

Die Befestigung mag hierbei ohne äußeren Eingriff und somit ohne die Notwendigkeit eines weiterführenden Kontroll- bzw. Montageaufwandes möglich sein.

Gemäß einem weiteren Ausführungsbeispiel der vorliegenden Erfindung ist eine Vorrichtung geschaffen, wobei durch das Einbringen der ersten Fixierungsvorrichtung in die Arretierungsvorrichtung das Auslöseelement betätigbar ist, so dass das Arretierungselement vom ersten Zustand in den zweiten Zustand überführt wird.

Das Auslöseelement mag hierbei die Arretierungsvorrichtung bzw. das Arretierungselement in dem ersten Zustand definiert festlegen. Durch das Einbringen der ersten Fixierungsvorrichtung in die Arretierungsvorrichtung wird nachfolgend das Auslöseelement automatisch betätigt, die Arretierungsvorrichtung bzw. das Arretierungselement in seinen zweiten Zustand überführt und somit die Fixierungsvorrichtung und die Arretierungsvorrichtung im Wesentlichen spielfrei zueinander festgelegt. Das Auslöseelement mag hierbei die automatische Arretierung ermöglichen und die Korrektheit der Befestigung mag somit keiner weiterführenden Kontrolle bedürfen.

Gemäß einem weiteren Ausführungsbeispiel der vorliegenden Erfindung ist eine Vorrichtung geschaffen, wobei das Gehäuse weiterhin aufweist eine zweite Öffnung, wobei durch die zweite Öffnung ein Entriegelungselement in die Arretierungsvorrichtung einbringbar ist, wobei durch das Einbringen des Entriegelungselementes in die Arretierungsvorrichtung das Arretierungselement vom zweiten Zustand in den ersten Zustand überführbar ist und wobei im ersten Zustand die erste Fixierungsvorrichtung und die Arretierungsvorrichtung relativ zueinander frei bewegbar sind.

Durch das manuelle, externe Einbringen des Entriegelüngselementes in die Arretierungsvorrichtung mag diese von ihrem zweiten, verriegelten, geschlossenen Zustand in den ersten, entriegelten, geöffneten Zustand überführt werden. Das manuelle Einbringen mag hierbei auch als weitere Sicherheitsmaßnahme verstanden werden, so dass ein automatisches Lösen des zweiten, verriegelten, geschlossenen Zustandes nicht möglich sein mag.

Dadurch, dass das Entriegelungselement im verriegelten Zustand auch nicht an, in oder bei der Arretierungsvorrichtung befestigt bzw. montiert ist, mag die Sicherheit weiter erhöht werden. Durch das Einbringen des Entriegelungselementes in die Arretierungsvorrichtung mag das Arretierungselement vom zweiten in den ersten Zustand überführt werden, das Auslöseelement mag nun im ersten Zustand wiederum die Sicherung des Arretierungselementes im ersten Zustand übernehmen. Das Sicherungselement, welches dafür verwendet worden sein mag, das Arretierungselement im zweiten Zustand sicher zu halten, mag hierbei manuell vor oder automatisch mit Einbringen des Entriegelungselementes entriegelt werden.

Gemäß einem weiteren Ausführungsbeispiel der vorliegenden Erfindung ist eine Vorrichtung geschaffen, weiterhin aufweisend zumindest ein Kraftelement, angeordnet an zumindest einem der Elemente aus der Gruppe bestehend aus Arretierungselement, Auslöseelement , Sicherungselement und Riegelelement, wobei das zumindest eine Kraftelement das zumindest eine Element in einem der ersten und zweiten Zustände lösbar festlegt.

Als Kraftelement mag hierbei jedwedes Element verstanden werden, welches geeignet ist, eine gerichtete, reproduzierbare Kraft auf eines der Elemente auszuüben. Somit mag hierbei beispielsweise eine Federkomponente verstanden werden, die das jeweilige Element in seinem verriegelten Zustand zu halten vermag. Aus anders geartete Komponenten und Elemente sind denkbar.

Somit mag sichergestellt sein, dass sich die Elemente aus ihrem gesicherten, verriegelten, geschlossenen Zustand nicht selbstständig oder durch geringfügige Unabsichtlichkeit in ihren gelösten, offenen, ungesicherten Zustand überführen lassen.

Gemäß einem weiteren Ausführungsbeispiel der vorliegenden Erfindung ist ein Befestigungssystem geschaffen, wobei der erste Teilbereich relativ zum zweiten Teilbereich beweglich ausgebildet ist.

Eine derartige Ausgestaltung mag eine komfortable und im Wesentliche reibungsarme Möglichkeit bieten, die beiden Teilbereiche gegeneinander zu verschwenken um nachfolgend die Schwenkbewegung des Elementes der Flugzeuginnenausstattung zu ermöglichen.

Gemäß einem weiteren Ausführungsbeispiel der vorliegenden Erfindung ist ein Befestigungssystem geschaffen, wobei die zweite Arretierungsvorrichtung in dem ersten Teilbereich als eine erfindungsgemäße Arretierungsvorrichtung ausgebildet ist.

Somit mögen die erste und auch die zweite Arretierungsvorrichtung, die zweite zumindest im ersten Teilbereich, als identische, erfindungsgemäße Arretierungsvorrichtung ausgebildet sein.

Hierdurch mag die Benutzerfreundlichkeit des vorliegenden Systems weiter gesteigert werden, da nun keine unterschiedlichen Arretierungsvorrichtungen auftreten. Somit mag die Bedienung der ersten als auch der zweiten Arretierungsvorrichtung im Wesentlichen identisch sein, Fehler in der Handhabung mögen somit wirksam unterbunden werden.

Gemäß einem weiteren Ausführungsbeispiel der vorliegenden Erfindung ist ein Befestigungssystem geschaffen, wobei die zweite Arretierungsvorrichtung in dem ersten Teilbereich ein Riegelelement aufweist, welches Riegelelement die zweite Arretierungsvorrichtung und die zweite Fixierungsvorrichtung lösbar fest verkoppelt.

Hierdurch mag eine einfache und sichere Verbindung zwischen Arretierungsvorrichtung und Fixierungsvorrichtung erfolgen, welche im Weiteren auch einfach wieder gelöst werden mag.

Durch eine Ausgestaltung des Riegelelementes in einem Bereich, der nicht zwingend von außen zugreifbar sein mag, mag auch verhindert werden, dass eine Entriegelung zu einem Zeitpunkt erfolgt, zu dem die jeweils andere, erste Arretierungsvorrichtung noch mit der ersten Fixierungsvorrichtung fest verkoppelt ist.

Gemäß einem weiteren Ausführungsbeispiel der vorliegenden Erfindung ist ein Befestigungssystem geschaffen, wobei zumindest ein Kraftelement an dem Riegelelement angeordnet ist, wobei das Kraftelement das Riegelelement in einem die zweite Arretierungsvorrichtung und die zweite Fixierungsvorrichtung verriegelten Zustand lösbar festlegt.

Hierdurch mag sichergestellt sein, dass ein manuelles, möglicherweise unbeabsichtigtes Lösen oder aber auch ein automatisches aber unbeabsichtigtes Lösen bzw. ein Entgleiten der Verkopplung von Arretierungsvorrichtung und Fixierungsvorrichtung vermieden wird.

Somit mag erst durch einen bewussten, gewollten, manuellen Eingriff die Arretierungsvorrichtung und die Fixierungsvorrichtung voneinander getrennt werden.

Gemäß einem weiteren Ausführungsbeispiel der vorliegenden Erfindung ist ein Befestigungssystem geschaffen, wobei der erste Teilbereich relativ zum zweiten Teilbereich beweglich ausgebildet ist unter Verwendung zumindest eines Elementes aus der Gruppe bestehend aus Drehgelenk, Schubgelenk, Kurvengelenk, Schraubengelenk, Dreh-Schubgelenk, Kugelgelenk und Plattengelenk.

Ebenso mag eine beliebige Kombination der vorgenannten Gelenke denkbar sein.

Die Verwendung eines solchen Gelenkes, welches möglicherweise standardisiert ist, ermöglicht die einfache Verbindung der beiden Teilbereiche, wobei je nach beabsichtigter Realisierung die jeweils ideale Bewegungsmöglichkeit gegeben sein mag.

Ebenso mag aufgrund der gezielten Auswahl eines entsprechenden Gelenkes überhaupt erst eine mögliche Bewegung definiert werden.

Gemäß einem weiteren Ausführungsbeispiel der vorliegenden Erfindung ist ein Befestigungssystem geschaffen, wobei das Element der Flugzeuginnenausstattung relativ zur Flugzeugstruktur in einem befestigten Zustand, in welchem befestigten Zustand jeweils eine der ersten und der zweiten Arretierungsvorrichtung mit jeweils einer der ersten und der zweiten Fixierungsvorrichtung gekoppelt ist, im Wesentlichen spielfrei befestigbar ist.

Spielfrei mag in diesem Zusammenhang verstanden werden, dass das Element der Flugzeuginnenausstattung relativ zur Flugzeugstruktur im Wesentlichen ohne große weitere Bewegungsmöglichkeit festgelegt ist.

Auftretende Vibrationen bzw. Verformungen, die aufgrund der Belastung von Flugzeugstruktur und/oder des Elementes der Flugzeuginnenausstattung auftreten, mögen hierbei jedoch abgefangen werden bzw. zugelassen sein, so dass aufgrund der Belastung bzw. Verformung eines der Elemente der Flugzeuginnenausstattung und der Flugzeugstruktur nicht das jeweils andere verformt werden mag.

Um eine erfindungsgemäße, im Wesentlichen spielfreie Befestigung zu erzielen, mögen am Element der Flugzeuginnenausstattung jeweils zumindest eine erste und eine zweite Arretierungsvorrichtung vorgesehen sein. Ebenso mag jedoch denkbar sein, eine Mehrzahl von ersten bzw. zweiten Arretierungsvorrichtungen vorzusehen, welche mit einer Vielzahl oder auch mit demselben der ersten und zweiten Fixierungsvorrichtung gekoppelt werden mögen.

Im Weiteren werden Ausführungsbeispiele der vorliegenden Erfindung, Bezug nehmend auf das Verfahren zum Befestigen eines Elementes einer Flugzeuginnenausstattung an einer tragenden Struktur in einem Flugzeug, beschrieben. Diese Ausführungsbeispiele gelten jedoch ebenfalls für die Arretierungsvorrichtung zum lösbaren Verbinden einer ersten Komponente mit einer zweiten Komponente für das Befestigungssystem zum Befestigen eines Elementes einer Flugzeuginnenstattung an einer Flugzeugstruktur für ein Flugzeug mit einem erfindungsgemäßen Befestigungssystem, für die Verwendung eines erfindungsgemäßen Befestigungssystems in einem Flugzeug sowie für das Verfahren zum Entfernen eines Elementes einer Flugzeuginnenausstattung von einer tragenden Struktur in einem Flugzeug.

Gemäß einem weiteren Ausführungsbeispiel der vorliegenden Erfindung ist ein Verfahren geschaffen aufweisend die Schritte automatisches, lösbares Verriegeln der ersten Arretierungsvorrichtung bei Anbringen an der ersten Fixierungsvorrichtung, automatisches, lösbares Verriegeln der zweiten Arretierungsvorrichtung bei Anbringen an der zweiten Fixierungsvorrichtung durch Einbringen der zweiten Fixierungsvorrichtung in die zweite Arretierungsvorrichtung und automatisches, lösbares Sichern zumindest einer der ersten und der zweiten Arretierungsvorrichtung in ihrem verriegelten Zustand unter Verwendung eines Sicherungselementes.

Durch das jeweilige automatische, jedoch lösbare Verriegeln der Arretierungsvorrichtung an der jeweiligen Fixierungsvorrichtung sowie durch das automatische, jedoch lösbare Sichern zumindest einer der ersten und der zweiten Arretierungsvorrichtung im verriegelten Zustand mag eine wesentlich vereinfachte Montagemöglichkeit geschaffen sein.

So mag das Hauptaugenmerk beim Befestigen auf den korrekten Sitz des Elementes der Flugzeuginnenausstattung gerichtet werden, ohne im Weiteren das sichere Verriegeln und Sichern zu beachten.

Hierdurch mag auch die Montagegeschwindigkeit signifikant erhöht werden.

Im Weiteren werden Ausführungsbeispiele der vorliegenden Erfindung, Bezug nehmend auf das Verfahren zum Entfernen eines Elementes einer Flugzeuginnenausstattung von einer tragenden Struktur in einem Flugzeug, beschrieben. Diese Ausführungen gelten jedoch ebenfalls für die Arretierungsvorrichtung zum lösbaren Verbinden einer ersten Komponente mit einer zweiten Komponente, für ein Befestigungssystem zum Befestigen eines Elementes einer Flugzeuginnenausstattung an einer Flugzeugstruktur, für das Verfahren zum Befestigen eines Elementes einer Flugzeuginnenausstattung an einer tragenden Struktur in einem Flugzeug, für ein Flugzeug mit einem erfindungsgemäßen Befestigungssystem sowie für die Verwendung eines erfindungsgemäßen Befestigungssystems in einem Flugzeug.

Gemäß einem weiteren Ausführungsbeispiel der vorliegenden Erfindung ist ein Verfahren geschaffen, weiter aufweisend die Schritte manuelles Entriegeln des Sicherungselementes der ersten oder zweiten Arretierungsvorrichtung, manuelles Entriegeln des Arretierungselementes dieser ersten oder zweiten Arretierungsvorrichtung durch Einbringen eines Entriegelungselementes in diese erste und zweite Arretierungsvorrichtung und manuelles Entriegeln des Riegelelementes der verbleibenden zweiten oder ersten Arretierungsvorrichtung.

Durch die Vornahme des manuellen Entriegelns mögen die jeweiligen Sicherungs- bzw. Arretierungs- oder Riegelelemente wirksam vor einer zufälligen, ungewollten bzw. fehlerhaften Entriegelung geschützt werden.

Auch durch eine Ausgestaltung, die vorsieht, dass die jeweiligen manuellen Entriegelungseingriffe nur in einer bestimmten, aufeinander aufbauenden bzw. voneinander abhängenden Reihenfolge durchgeführt werden mögen, mag die Sicherheit der Befestigung des Elementes der Flugzeuginnenausstattung weiter erhöht werden.

So mag das manuelle Entriegeln des Arretierungselementes erst nach erfolgtem manuellen Entriegeln des Sicherungselementes erfolgen und im Weiteren mag das manuelle Entriegeln des Riegelelementes erst nach dem manuellen Entriegeln des Arretierungselementes und/oder einer gegebenenfalls benötigten Schwenkbewegung möglich sein.

Exemplarische Ausführungsbeispiele der vorliegenden Erfindung sind in den nachfolgenden Figuren dargestellt und werden im Weiteren näher erläutert.

Gleiche oder ähnliche Komponenten in unterschiedlichen Figuren sind mit gleichen Bezugsziffern versehen.

Die Darstellung in den Figuren ist schematisch und nicht maßstäblich, mag jedoch qualitative Größenverhältnisse ausdrücken.

### Kurze Beschreibung der Figuren

Es zeigt:
- Figur 1: eine schematische Ansicht der Anordnung eines Elementes einer Flugzeuginnenausstattung, befestigt an einer tragenden Struktur eines Flugzeuges;
- Figur 2: eine exemplarische Ausgestaltung einer Fixierungsvorrichtung;
- Figur 3a,b: weitere exemplarische Ausgestaltungen einer Fixierungsvorrichtung;
- Figur 4a bis c: eine exemplarische Ausgestaltung einer Arretierungsvorrichtung der vorliegenden Erfindung;
- Figur 5a bis c: eine weitere exemplarische Ausgestaltung einer Arretierungsvorrichtung der vorliegenden Erfindung;
- Figur 6a bis e: eine weitere exemplarische Ausgestaltung einer Arretierungsvorrichtung der vorliegenden Erfindung;
- Figur 7: eine schematische Zeichnung des erfindungsgemäßen Verfahrens zur Befestigung und zum Entfernen eines Elementes einer Flugzeuginnenausstattung;
- Figur 8a -c: eine weitere exemplarische Ausgestaltung einer Arretierungsvorrichtung der vorliegenden Erfindung.

### Detaillierte Beschreibung der Ausführungsbeispiele

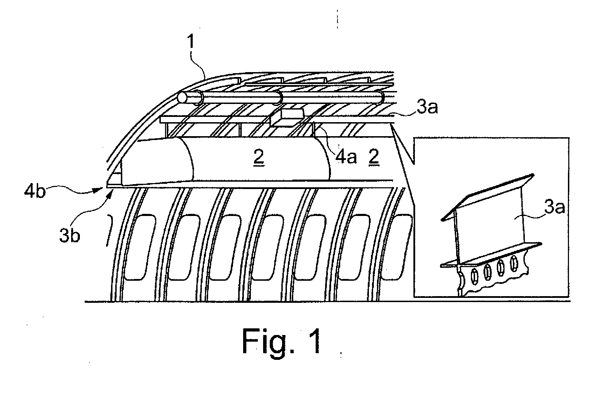

Im Weiteren ist Bezug nehmend auf Figur 1 die Befestigung eines Elementes der Flugzeuginnenausstattung 2 (hier dargestellt als ein Overhead Bin) an einem Flugzeugrumpf 1 gezeigt. Die Befestigung des Elementes 2 erfolgt hierbei über eine erste und eine zweite Fixierungsvorrichtung 3a,b, welche im Wesentlichen mit der Flugzeugstruktur bzw. dem Flugzeugrumpf 1 verbunden sind. Zwischen dem Element 2 und der ersten und zweiten Fixierungsvorrichtung 3a,b befinden sich nur schematisch dargestellte erste bzw. zweite Arretierungsvorrichtungen 4a,b.

Hier dargestellt weist das Element 2 zumindest zwei erste Arretierungsvorrichtungen 4a auf. Jedoch ist ebenso denkbar eine Befestigung ausschließlich unter Verwendung einer ersten Arretierungsvorrichtung 4a bzw. mit mehr als zwei ersten Arretierungsvorrichtungen 4a zu realisieren. Auch bei der zweiten Arretierungsvorrichtung 4b sind Ausgestaltungen von einer bis zu einer Vielzahl von Arretierungsvorrichtungen denkbar.

Die Anzahl ist von der Dimensionierung der jeweiligen Arretierungsvorrichtung 4a,b abhängig und soll insbesondere den auftretenden Belastungen im Regelbetrieb in einem Flugzeug Rechnung tragen.

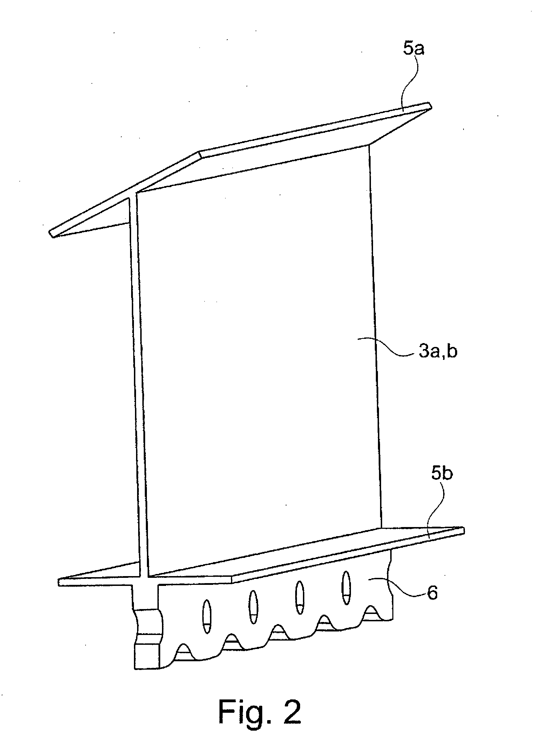

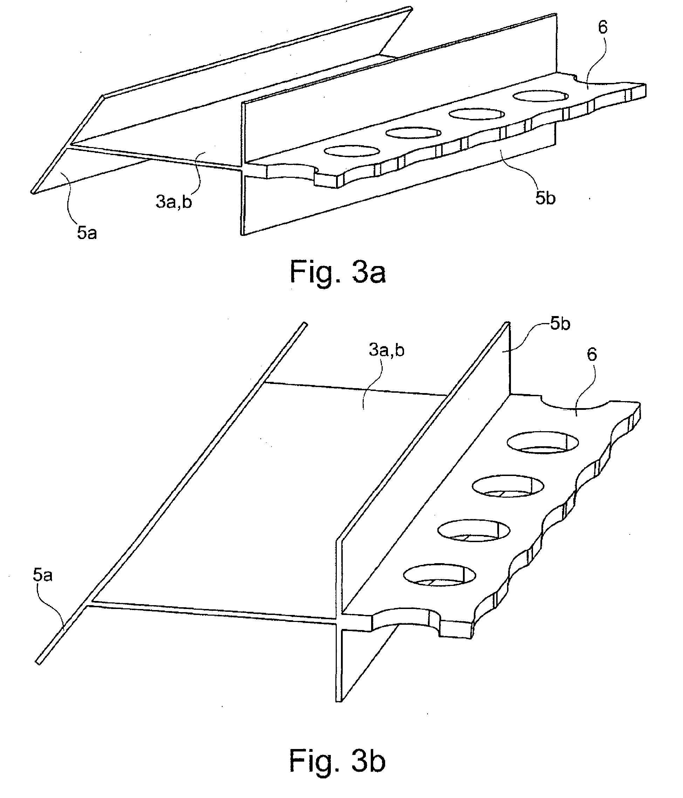

Im Weiteren werden Bezug nehmend auf die Figuren 2, 3a und 3b exemplarische Ausgestaltungen der Fixierungsvorrichtung beschrieben.

In dieser exemplarischen Ausgestaltung der Fixierungsvorrichtung 3a,b finden sich zwei unterschiedliche T-Elemente 5a und 5b sowie ein Lochelement 6.

Das T-Element 5a ist hierbei gewinkelt ausgebildet, mag jedoch ebenso senkrecht zur Ebene des Lochelementes stehen und damit im Wesentlichen parallel zum T-Element 5b sein.

Jedoch sind auch anders geartete Ausgestaltungen der Fixierungsvorrichtung möglich, die im Wesentlichen ein Lochelement 6 oder zumindest einen Teil dessen aufweisen, um eine sichere Befestigung im Sinne des Erfindungsgedanken zu ermöglichen.
Das T-Element 5a wird z.B. großflächig mit der Flugzeugstruktur bzw. dem Flugzeugrumpf 1 in Verbindung gebracht bzw. an diesem angebracht und ermöglicht so eine großflächige Kraftübertragung auf die Flugzeugstruktur 1.

Die Verbindung zwischen Flugzeugstruktur 1 und T-Element 5a mag hierbei durch Nieten, Schweißen, Löten, Pressen oder ähnliche Verbindungsvorgänge erfolgen. Ebenso ist es möglich, das T-Element 5a einstückig in die Flugzeugstruktur 1 zu integrieren.

Das T-Element 5b, direkt befestigt am Lochelement 6, ist zu diesem Lochelement 6 senkrecht angeordnet. Es mag einerseits als Anschlag bzw. als Beabstandung dienen und somit ein definiertes Einbringen der Fixierungsvorrichtung in die Arretierungsvorrichtung sicherstellen.

Die Löcher der Lochelemente 6 sind in den Figuren 2, 3a, b in identischer Größe dargestellt; ebenso ist jedoch denkbar, eine unterschiedliche Größenabfolge zu realisieren, um somit eine weiterführende Positionsbestimmung auf der jeweiligen Fixierungsvorrichtung 3a,b zu ermöglichen.

Auch ist es möglich, je nach Positionierung einer Fixierungsvorrichtung 3a,b die dortigen Löcher in ihrer Größe unterschiedlich auszugestalten, um beispielsweise eine fehlerhafte bzw. verdrehte Montage wirksam zu verhindern.

Das T-Element 5b in seiner Funktion als Anschlagselement mag hierbei im Weiteren das Auslöseelement 14 betätigen, um so das Arretierungselement 13 von einem ersten in den zweiten Zustand zu überführen.

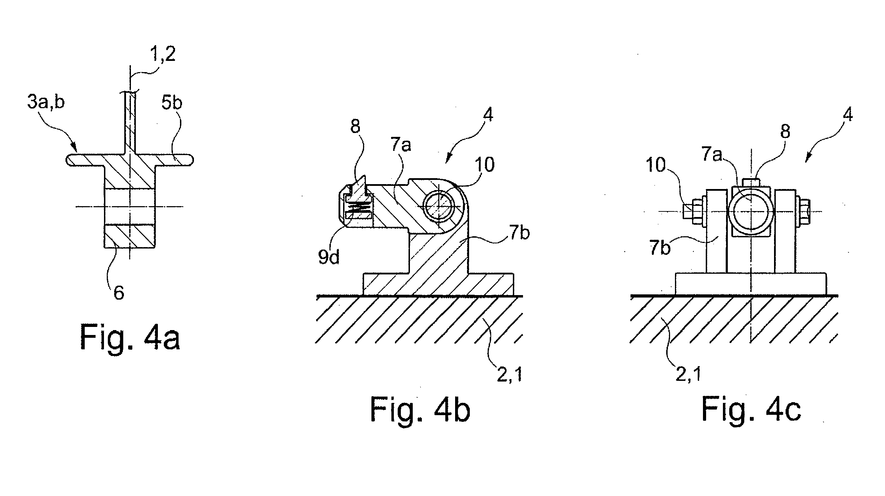

Sowohl das Arretierungselement 13 als auch die erste und zweite Arretierungsvorrichtung 4a,b bzw. der erste Teilbereich 7a der ersten oder zweiten Arretierungsvorrichtung 4a,b ist koppelbar mit den Löchern des Lochelementes 6. Weiter Bezug nehmend auf Figuren 4a bis c wird eine exemplarische Ausgestaltung einer Arretierungsvorrichtung 4 der vorliegenden Erfindung beschrieben.

Schematisch dargestellt in Figur 4a ist wiederum eine Schnittzeichnung der Fixierungsvorrichtung 3a,b. Eine Arretierungsvorrichtung gemäß der vorliegenden Erfindung wird in den Figuren 4b und c, zueinander gedreht um 90°, dargestellt.

Die Arretierungsvorrichtung 4 weist einen ersten Teilbereich 7a sowie einen zweiten Teilbereich 7b auf. Der zweite Teilbereich 7b kann entweder an der Flugzeugstruktur 1 oder aber am Element der Flugzeuginneneinrichtung 2 befestigt sein.

Die beiden Teilbereiche 7a,b sind zueinander beweglich gelagert, hier dargestellt über die Bewegungsmöglichkeit 10. Diese wird in Figur 4b bzw. 4c exemplarisch als Drehgelenk dargestellt.

Somit ist die Verschwenkung des ersten Teilbereichs 7a in Relation zum zweiten Teilbereich 7b und somit entweder relativ zur Flugzeugstruktur 1 oder aber zum Element 2 möglich, je nachdem, an welchem der beiden 1,2 der zweite Teilbereich 7b befestigt ist.

Der erste Teilbereich 7a ist hier vorliegend als im Wesentlichen rundes bzw. leicht stabförmiges Element in seinem Endbereich ausgebildet, welches mit zumindest einem Loch des Lochelements 6 korrespondiert.

Durch Einschieben des ersten Teilbereichs 7a in ein Loch des Lochelements 6 wird das Riegelelement 8 automatisch aus seiner in Figur 4b dargestellten ausgefahrenen Ruheposition eingeschoben und nachfolgend nach erfolgtem Durchschieben des Teilbereichs 7a durch ein Loch des Lochelements 6 hindurch, durch das Kraftelement 9d wieder nach außen in seine Ruheposition bewegt.

Das Kraftelement 9d ist hier schematisch als ein Federelement dargestellt. Das automatische Verriegeln erfolgt durch die leicht schräge Ausgestaltung des Riegelelements 8, welches ein Zurückschieben bzw. Einschieben beim Hineinschieben in das Loch des Lochelements 6 ermöglicht.

Die in eingeschobenem Zustand hintere, dem Lochelement zugewandte Seite des Riegelelementes 8 wiederum weist keine Abschrägung auf, so dass ein automatisches Lösen des Riegels bei versuchtem Herausziehen des ersten Teilbereichs 7a aus dem Loch des Lochelements 6 nicht möglich ist, vielmehr wirksam unterbunden wird.

Somit ist bei eingeschobenem Zustand der erste Teilbereich 7a in Relation zur Fixierungsvorrichtung 3a,b festgelegt.

Die Fixierungsvorrichtung 3a,b wiederum ist, hier nicht dargestellt, entweder mit einem Element der Flugzeuginnenausstattung 2 oder mit dem Flugzeugrumpf 1 verbunden. Die jeweilige Verbindung von Fixierungsvorrichtung 3a,b und Arretierungsvorrichtung 4a,b an Flugzeugstruktur bzw. Flugzeugrumpf 1 und Element der Flugzeuginnenausstattung 2 schließen sich jedoch gegenseitig aus.

In Figur 4c dargestellt ist die Arretierungsvorrichtung 4 der Fig. 4b, gedreht um 90°. Zu sehen ist hier insbesondere, wie das Riegelelement 8 über den kreisförmigen Querschnitt des ersten Teilbereichs 7a hinaus ragt und somit bei eingeschobenem Zustand in das Loch des Lochelementes dieses gegenüber der Fixierungsvorrichtung 3a,b festlegt und verriegelt.

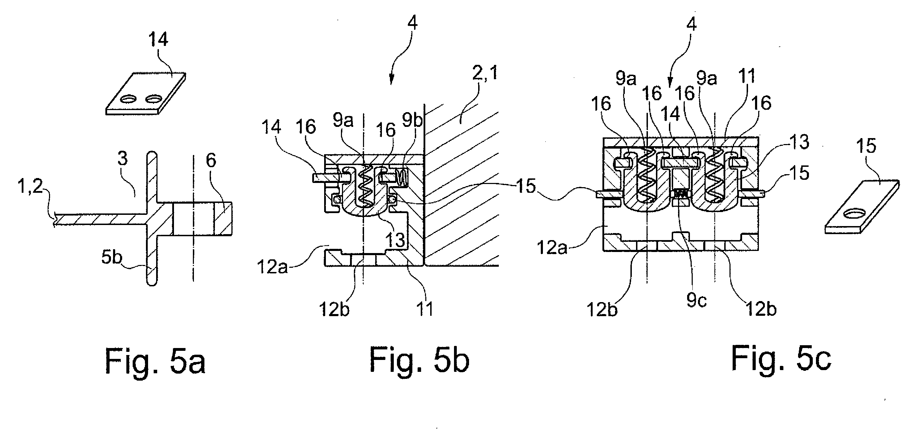

Im Weiteren wird Bezug nehmend auf Figuren 5a bis c eine weitere exemplarische Ausgestaltung der Arretierungsvorrichtung 4 der vorliegenden Erfindung beschrieben.

Dargestellt in Figur 5a ist wiederum eine Fixierungsvorrichtung 3a,b mit ihrem T-Element 5b sowie dem Lochelement 6. Befestigt ist die Fixierungsvorrichtung 3 entweder an der Flugzeugstruktur bzw. dem Flugzeugrumpf 1 oder aber am Element der Flugzeuginneneinrichtung 2.

Figur 5b zeigt in korrespondierender Position eine Arretierungsvorrichtung 4 gemäß einem exemplarischen Ausführungsbeispiel der vorliegenden Erfindung.

Die Arretierungsvorrichtung 4 weist ein Gehäuse 11 auf, welches seinerseits an der Flugzeugstruktur 1 bzw. am Element der Flugzeuginnenausstattung 2 befestigt ist.

Auch hier schließen sich die Befestigungen von Fixierungsvorrichtungen 3 und Arretierungsvorrichtungen 4 aus. Am Gehäuse angeordnet, findet sich die erste Gehäuseöffnung 12a, welche mit dem Lochelement 6 der Fixierungsvorrichtung 3 korrespondiert.

Das Lochelement 6 kann über die erste Öffnung 12a in die Arretierungsvorrichtung 4 eingebracht werden. Die Arretierungsvorrichtung 4 weist weiterhin ein erstes Arretierungselement 13 auf, welches im Inneren über ein Kraftelement 9a, hier dargestellt als Federelement, verfügt.

Das Arretierungselement13 weist weiterhin in einem Teilbereich eine Nut 16 auf, welche Nut 16 ausgestaltet ist, sowohl mit einem Auslöseelement 14 als auch mit einem Sicherungselement 15 zu korrespondieren.

Auslöseelement 14 bzw. Auslöseelement 15 vermögen in diese Nut einzugreifen und das Arretierungselement 13 im jeweiligen; ersten oder zweiten Zustand zu sichern bzw. zu halten. In Figuren 5b, c dargestellt ist ausschließlich der erste, geöffnete, entriegelte Zustand.

Weiterhin weisen sowohl das Auslöseelement 14 als auch das Sicherungselement 15 Kraftelemente 9b,c , hier ebenfalls dargestellt als Federelemente, auf. Diese halten einerseits im ersten Zustand das Auslöseelement 14 in der Nut 16 des Arretierungselements 13 als auch im zweiten, nicht dargestellten verriegelten Zustand das Sicherungselement 15 in der Nut 16 des Arretierungselements 13.

Sowohl Auslöseelement 14 als auch Sicherungselement 15 sind im Wesentlichen gleichartig ausgebildet dargestellt und stellen ein im Wesentlichen längliches Element dar.

Das Element weist in einem Teilbereich eine lochförmige Öffnung auf, welche derart mit dem Arretierungselement 13 zusammenwirkt, dass sich dieses in der lochförmigen Öffnung einerseits frei bewegen lässt, andererseits das Auslöseelement 14 bzw. das Sicherungselement 15 durch das Kraftelement 9b,c in die Nut 16 des Arretierungselements 13 gebracht werden kann.

Im Falle des Einbringens des Auslöseelements 14 bzw. des Sicherungselements 15 in die Nut 16 wird das Arretierungselement 13 im jeweiligen ersten bzw. zweiten Zustand gehalten.

Figur 5b und 5c sind vorliegend wieder um 90° gedreht dargestellt.

Beim Einbringen des Lochelementes 6 der Fixierungsvorrichtung 3 über die erste Öffnung 12a in die Arretierungsvorrichtung 4 drückt das Auslöseelement 14 gegen das T-Element 5b und wird hierdurch aus seinem gesicherten Zustand gegen die Kraftwirkung des Kraftelementes 9b in einen ungesicherten Zustand überführt.

Hierbei greift nun nicht mehr das Auslöseelement 14 in die Nut 16 des Arretierungselementes 13, dieses wird nachfolgend über das Kraftelement 9a durch zumindest ein Loch des Lochelements 6 bewegt und arretiert somit durch die Kraftwirkung des Arretierungselements 13 im Loch des Lochelements 6 die Arretierungsvorrichtung 4 gegenüber der Fixierungsvorrichtung 4. Das Loch im Lochelement 6 sowie das Arretierungselement 13 korrespondieren derart miteinander, dass eine im Wesentlichen spielfreie Arretierung bzw. Fixierung möglich wird.

Im nun zweiten Zustand, in dem das Arretierungselement 13 über das Kraftelement 9a durch das Loch des Lochelements 6 verschoben wurde, greift das Sicherungselement 15 durch die Kraftwirkung des Kraftelementes 9c seinerseits in die Nut 16 des Arretierungselements 13 ein und sichert dieses im zweiten, ausgefahrenen, verriegelten Zustand.

In Figur 5c dargestellt ist ein im Wesentlichen symmetrischer Aufbau der Arretierungsvorrichtung 4 mit zwei parallelen Arretierungselementen 13, Auslöseelementen 14 sowie Sicherungselementen 15.

In diesem exemplarischen Ausführungsbeispiel sind die Bewegungsrichtungen der einzelnen Arretierungselemente 13, Auslöseelemente 14 und Sicherungselemente 15 jeweils senkrecht zueinander. Andere Ausgestaltungen sind jedoch möglich.

Zum nachfolgenden Lösen der Arretierungsvorrichtung 4 von der Fixierungsvorrichtung 3 ist nachfolgend ein manueller Eingriff erforderlich.

Gelöst werden diese voneinander, indem zuerst manuell, zum Beispiel durch einfaches Zusammendrücken mit Fingern oder über eine andersgeartete Ausgestaltung das Sicherungselement 15 gegen die Kraftwirkung des Kraftelementes 9c aus der Nut 16 des Arretierungselementes 13 verschoben wird. Dieses kann sich nun wiederum frei in der Öffnung des Arretierungselementes 15 bewegen.

Jedoch wird das Arretierungselement noch durch die Kraftwirkung des Kraftelementes 9a im verriegelten, zweiten Zustand gehalten. Nachfolgend wird nun manuell ein schematisch nicht dargestelltes Entriegelungselement durch die zweite Gehäuseöffnung 12b in die Arretierungsvorrichtung 4 eingebracht.

Dieses Entriegelungselement mag als einfacher Stößel oder Stift ausgestaltet sein, welcher im Wesentlichen eine zur zweiten Gehäuseöffnung 12b korrespondierende Form aufweist. Das Entriegelungselement wird durch die zweite Gehäuseöffnung 12b in das Gehäuse 11 eingebracht und bewegt das Arretierungselement 13 gegen die Kraftwirkung des Kraftelementes 9a vom zweiten in den ersten Zustand.

Im ersten Zustand greift nun das Auslöseelement 14 wiederum in die Nut 16 des Arretierungselementes 13 ein und hält dieses im ersten Zustand. Das Entriegelungselement kann nun aus dem Gehäuse 11 entfernt werden, das Arretierungselement 13 wird über das Auslöseelement 14 im ersten Zustand gehalten.

Nun ist das Arretierungselement 13 nicht mehr in Eingriff mit dem Loch des Lochelements 6, so dass die Arretierungsvorrichtung 4 und die Fixierungsvorrichtung 3 wieder gegeneinander beweglich sind. Nachfolgend kann nun die Arretierungsvorrichtung 4 von der Fixierungsvorrichtung 3 abgezogen werden, oder umgekehrt.

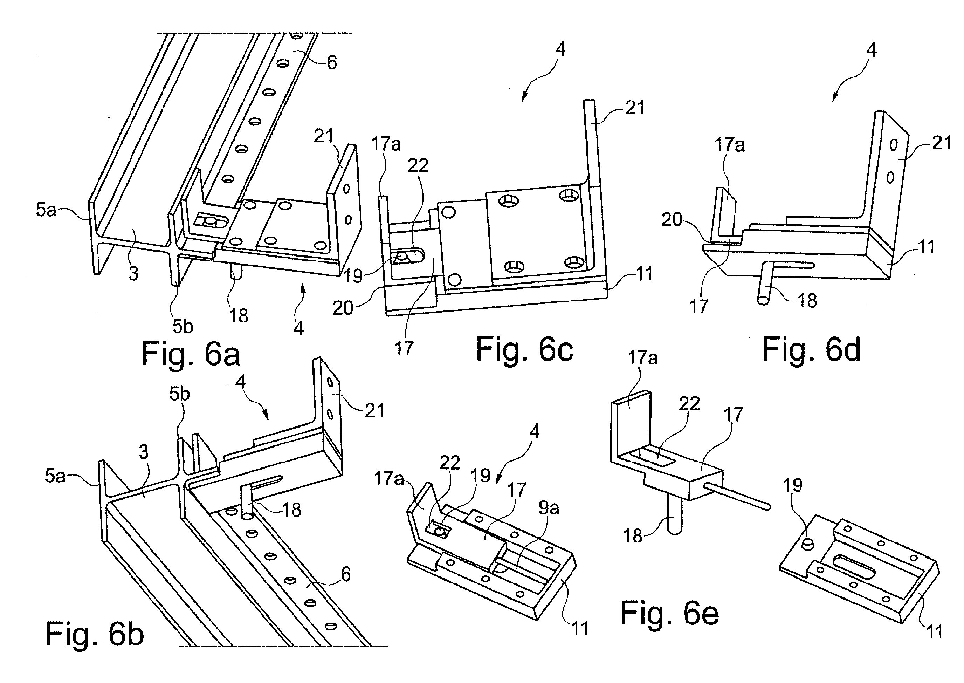

Weiter wird Bezug nehmend auf die Figuren 6a bis e eine weitere exemplarische Ausgestaltung der Arretierungsvorrichtung 4 der vorliegenden Erfindung beschrieben.

In Figur 6a bzw. 6b ist eine schematische Auf- bzw. Ansicht von oben bzw. Ansicht von unten einer Fixierungsvorrichtung 3 mit den T-Elementen 5a, b und dem Lochelement 6 dargestellt.

Die Arretierungsvorrichtung 4 ist im arretierten Zustand am Lochelement 6 dargestellt. Die Arretierungsvorrichtung in Figur 6c weist im Gehäuse 11 ein Schiebeelement 17 auf, welches im zu schließenden Zustand mit seinem Stirnteil 17a des Schiebeelements 17 gegen das Lochelement 6 gedrückt wird.

Durch das Drücken des Stirnteils 17a gegen das Lochelement 6 wird das Stirnteil 17a in Richtung der Befestigungsseite 21 gedrückt. Mit der Befestigungsseite 21 wird die Arretierungsvorrichtung 4 wiederum entweder an der Flugzeugstruktur 1 oder am Element der Flugzeuginnenausstattung 2 befestigt, die Fixierungsvorrichtung 3 jeweils an dem anderen der beiden 1,2. Durch das Zurückschieben des Schiebeelements 17 mittels des Stirnteils 17a wird darunter liegend eine Öffnung 20 freigelegt, welche in ihrer Dicke im Wesentlichen mit der Dicke des Lochelements 6 korrespondiert, um die geforderte spielfreie Befestigung zu erzielen.

Das Schiebeelement 17 weist weiterhin eine Aussparung 22 auf. Im Boden des Gehäuses 11 ist eine Nase 19 eingebracht, welche Nase 19 im Wesentlichen mit einem Loch des Lochelements 6 korrespondiert, um wie zuvor die im Wesentlichen spielfreie Befestigung zu ermöglichen.

Die Aussparung 22 im Schiebeelement 17 ermöglicht hierbei eine Ausgestaltung der Nase 19, welche somit eine höhere Höhe als die Dicke des Lochelements 6 aufweist.

Bei Einbringen der Arretierungsvorrichtung 4 wird, wie zuvor erwähnt, das Schiebeelement 17 Richtung Befestigungselement 21 verschoben. Die Nase 19 wird freigelegt, in ein korrespondierendes Loch des Lochelements 6 eingebracht, wodurch aufgrund der korrespondierenden Dicke des Lochelements 6 und der Öffnung 20 das Schiebeelement wieder freigegeben wird.

Über ein Kraftelement 9a, welches seinerseits eine Kraftwirkung des Schiebeelements 17 in Richtung der Fixierungsvorrichtung 3 erzeugt, wird das Schiebeelement 17 in seine Ruheposition zurückgeschoben. Nach erfolgtem Zurückschieben liegt das Lochelement 6, arretiert über die Nase 19, zwischen der unteren Seite des Gehäuses 11 und dem Schiebeelement 17.

Somit wird durch Anschieben des Arretierungselements 13 eine lösbare und im Wesentlichen spielfreie Verbindung zwischen Fixierungsvorrichtung 3 und Arretierungsvorrichtung 4 geschaffen.

Zum Entriegeln und damit zum Lösen von Fixierungsvorrichtung 3 und Arretierungsvorrichtung 4 wird im verriegelten Zustand das Entriegelungselement 18 manuell betätigt. Dieses ist ebenfalls am Schiebeelement 17 befestigt und ragt durch eine untere Öffnung aus der Unterseite des Gehäuses 11 hinaus.

Durch ein manuelles Verschieben des Entriegelungselements 18 entgegen der Kraft des Kraftelements 9a in Richtung des Befestigungselements 21 wird das Schiebeelement 17 wieder zurückgeschoben, somit wird das Lochelement 6 freigelegt, und die Arretierungsvorrichtung 4 kann von der Fixierungsvorrichtung 3 abgenommen werden.

Weiterhin ist es möglich, jedoch nicht in Figuren 6a bis 6e dargestellt, dass das manuelle Verschieben des Entriegelungselements 18 zuvor über ein Sicherungselement, welches ebenfalls manuell betätigt wird, verhindert werden kann.

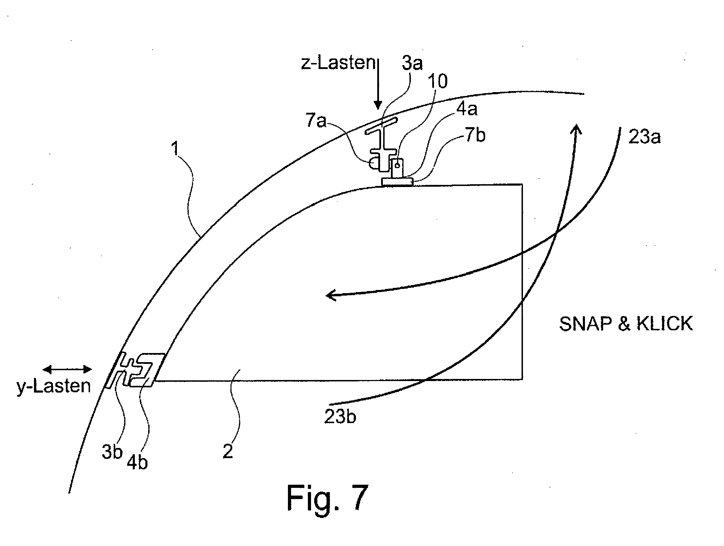

Im Weiteren wird Bezug nehmend auf Figur 7 das erfindungsgemäße Verfahren zur Befestigung und zum Entfernen des Elements der Flugzeuginnenausstattung 2 gemäß der vorliegenden Erfindung beschrieben.

Zu sehen in Figur 7 ist ein Element der Flugzeuginnenausstattung 2, hier schematisch dargestellt als ein Overhead Bin, sowie die Flugzeugstruktur bzw. der Flugzeugrumpf 1 und damit die Außenhülle 1.

Das Element 2 wird über eine erste und eine zweite Arretierungsvorrichtung 4a,b an der ersten und zweiten Fixierungsvorrichtung 3a,b befestigt. Hier schematisch dargestellt ist eine erste Arretierungsvorrichtung 4a gemäß den Figuren 4a bis c sowie eine zweite Arretierungsvorrichtung 4b gemäß den Figuren 5a bis 5c. Die erste Fixierungsvorrichtung 3a entspricht hierbei im Wesentlichen der der Figur 2, und die zweite Fixierungsvorrichtung 3b entspricht hierbei im Wesentlichen der in Figur 3a und b dargestellten Fixierungsvorrichtung 3.

Die erste Arretierungsvorrichtung 4a wird bei Montage in ein Loch des Lochelements 6 der ersten Fixierungsvorrichtung 3a eingesetzt. Durch das Einsetzen verriegelt das Riegelelement und hält die erste Arretierungsvorrichtung 4a mit der ersten Fixierungsvorrichtung 3a verbunden. Über die Bewegungsmöglichkeit 10 ist nun das Element 2 beweglich über die erste Arretierungsvorrichtung 4a mit der ersten Fixierungsvorrichtung 3a und hierüber mit dem Flugzeugrumpf 1 verbunden.

Der Pfeil 23a beschreibt die Schwenkbewegung für die Befestigung. Das Element 2 wird über die Bewegungsmöglichkeit 10 in Richtung des Pfeils 23a verschwenkt. Die Dimensionierung des Befestigungssystems ist hierbei dergestalt, dass die zweite Fixierungsvorrichtung 3b in die erste Gehäuseöffnung 12a der zweiten Arretierungsvorrichtung 4b eingebracht und wie zuvor verriegelt wird.

Dies ermöglicht eine einfache Montage, da die Sicht auf die jeweiligen Komponenten 3a,b und 4a,b während des gesamten Montagevorganges ausreichend vorhanden ist. Zudem muss bei verriegelter erster Arretierungsvorrichtung 4a mit der ersten Fixierungsvorrichtung 3a im Wesentlichen keine Kraft mehr aufgebracht werden, um das Element 2 zu gegen die eigene Gewichtskraft halten.

Dies resultiert aus der Tatsache, dass die erste Fixierungsvorrichtung 3a und die erste Arretierungsvorrichtung 4a im Wesentlichen über dem Schwerpunkt des Elements 2 liegen.

Somit werden über die erste Arretierungsvorrichtung 4a und die erste Fixierungsvorrichtung 3a im Wesentlichen ausschließlich Z-Lasten an die Flugzeugstruktur 1 weitergegeben.

Durch Verschwenken und Einrasten der zweiten Arretierungsvorrichtung 4b und der zweiten Fixierungsvorrichtung 3b wird eine weitere Verbindung des Elements 2 mit der Flugzeugstruktur 1 hergestellt.

Über diese Verbindung werden im Wesentlichen nur Lasten in Y-Richtung (quer zur Flugzeuglängsachse) abgeleitet. Durch eine geeignete, sich wiederholende Ausgestaltung von ersten und zweiten Fixierungsvorrichtungen 3a,b und ersten und zweiten Arretierungsvorrichtungen 4a,b werden Belastungen in X-Richtung (parallel zur Flugzeuglängsachse), also in Richtung der Flugzeug-Längsachse großflächig durch geringfügige Scherbelastungen ebenfalls über die Elemente 3a,4a,3b,4b auf die Flugzeugstruktur übertragen.

Die Arretierung bzw. die Sicherung der einzelnen Fixierungs- und Arretierungsvorrichtungen miteinander erfolgen hierbei, wie zuvor beschrieben, automatisch.

Das Entfernen des Elements 2 wiederum wird in Figur 7 durch die Schwenkbewegung, dargestellt durch Pfeil 23b, beschrieben. Hierbei wird zuerst das nicht näher dargestellte Entriegelungselement über die zweite Gehäuseöffnung 12b in die zweite Arretierungsvorrichtung 4b eingebracht.

Zuvor muss das Sicherungselement 15 manuell entriegelt werden, um unter Verwendung des Entriegelungselementes das Arretierungselement 13 aus seinem zweiten, gesicherten, mit dem Lochelement 6 verbundenen Zustand in den ersten Zustand überzuführen.

Durch manuelles Entriegeln des Sicherungselements 15 und nachfolgendem Einbringen des Entriegelungselements wird das Arretierungselement 13 über das Auslöseelement 14 in seinem ersten, entriegelten, offen Zustand gehalten.

Eine Ausgestaltung des manuell einzubringenden Entriegelungselements mit einem geringfügig kleineren Querschnitt als das Loch des Lochelements 6 mag hierbei bereits im Entriegelungsvorgang eine minimale Schwenkbewegung erlauben, welche nachfolgend ein automatisches Auslösen des Auslöseelements 14 und somit ein erneutes Verriegeln des Arretierungselements 4, wie zuvor beschrieben, verhindert.

Nach erfolgter Entriegelung der zweiten Arretierungsvorrichtung 4b ist diese relativ zur zweiten Fixierungsvorrichtung 3b wieder frei beweglich, und es erfolgt die Schwenkbewegung 23b.

Nun wird durch manuelles Betätigen des Riegelelements 8 zwischen Flugzeugstruktur 1 und Element der Flugzeuginnenausstattung 2 die erste Arretierungsvorrichtung 4a von der ersten Fixierungsvorrichtung gelöst. Somit ist das Element 2 vollständig von der ersten und zweiten Fixierungsvorrichtung lösbar.

Nicht näher dargestellt, jedoch prinzipiell auch möglich und in bestimmten Ausführungsformen gewünscht, ist das Vertauschen von sowohl der ersten und zweiten Fixierungsvorrichtung mit der ersten und zweiten Arretierungsvorrichtung und somit das jeweilige Anbringen der Vorrichtungen 3a,b, 4a,b an den jeweils anderen Elementen Flugzeugstruktur 1 bzw. Element 2. Auch ist eine Mischung möglich, zum Beispiel erste Fixierungsvorrichtung 3a, angebracht an Flugzeugstruktur 1 und zweite Fixierungsvorrichtung 3b, angebracht an Element 2.

Jegliche Mischung und Variation ist hierbei möglich. Weiterhin ist möglich, dass die Bewegungsmöglichkeit nicht an der Fixierungs- bzw. Arretierungsvorrichtung der Z-Lasten (in Z-Richtung) erfolgt, sondern an der der Y-Lasten. Die Z-Richtung ist hierbei die Vertikale (senkrecht zur Flugzeuglängsachse).

Die erfindungsgemäße Befestigung erlaubt hierbei die Aufnahme und Abstützung von sämtlichen an dem befestigten Element der Flugzeuginnenausstattung sicher aufzunehmen und/oder abzuleiten. Insbesondere Kräfte aber auch auftretende Momente bzw. Scherbelastungen werden über die im Wesentlichen spielfreie Befestigung an die Flugzeugstruktur weitergegeben.

Neben den zuvor erwähnten Belastungen (Kräfte und Momente) in Z-Richtung sowie Y-Richtung (entlang der Flugzeugquerachse bzw. der Achse der Flugzeugflügel) werden Belastungen in X-Richtung (entlang der Flugzeuglängsachse bzw. Rumpflängenrichtung) sicher aufgenommen und abgeleitet.

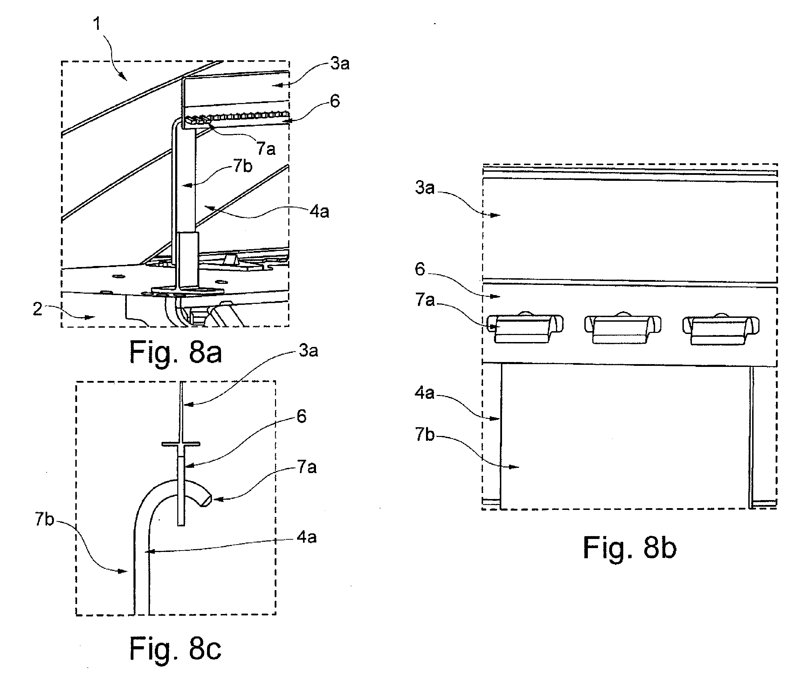

Weiter wird Bezug nehmend auf die Figuren 8a bis c eine weitere exemplarische Ausgestaltung der Arretierungsvorrichtung 4 der vorliegenden Erfindung beschrieben.
Wie in Figs. 8a und 8b zu erkennen, sind exemplarisch drei Krallen in drei entsprechende Öffnungen des Lochelements 6 eingebracht, jedoch ist auch eine beliebige andere Anzahl, wie beispielsweise nur eine Kralle; oder jedoch eine großflächige Krallenanordnung über im Wesentlichen die gesamte Länge des Elements der Flugzeuginnenausstattung 2 denkbar.

Durch den Eingriff der Krallen des ersten Teilbereichs 7a in die Öffnungen des Lochelements 6 wird das Element der Flugzeuginnenausstattung 2 im Wesentlichen derart festgelegt, so dass ausschließlich eine Schwenkbewegung um eine Achse durch die Öffnungen des Lochelements 6 durchführbar ist.

Durch die geeignete Ausgestaltung der Schlitze des Lochelements 6 mag weiter folgend eine definierte Positionierung möglich sein, gleichzeitig werden Bewegungen bzw. Verrutschungen, beispielsweise in X-Richtung, also entlang der Flugzeuglängsachse, wirksam vermieden.

In Figur 8c ist zu erkennen, dass der krallenförmige erste Teilbereich 7a in seinem eingebrachten Zustand, in dem die zweite Arretierungsvorrichtung 4b mit der zweiten Fixierungsvorrichtung 3b verbunden ist, einen überstehenden Bereich aufweist. Dieser überstehende Bereich ist in Fig. 8c exemplarisch rechts der Mittelachse der ersten Fixierungsvorrichtung 3a dargestellt.

Der überstehende Bereich ermöglicht die einfache und schnelle Montage des Elementes der Flugzeuginnenausstattung 2 über die erste Arretierungsvorrichtung 4a bzw. den ersten Teilbereich 7a der ersten Arretierungsvorrichtung 4a an der ersten Fixierungsvorrichtung 3a.

Zur Montage wird das schräggestellte Element der Flugzeuginnenausstattung 2 mit angebrachter erster Arretierungsvorrichtung 4a in die Öffnungen des Lochelements 6 der ersten Fixierungsvorrichtung 3a eingebracht. Diese stellen nachfolgend die einzig mögliche Bewegungsachse dar, so dass das Element eine Drehachse um die Längsachse der Öffnungen des Lochelements 6 aufweist, um diese verschwenkt wird und nachfolgend mit der zweiten, nicht dargestellten Arretierungsvorrichtung 4b in die zweite Fixierungsvorrichtung 3b (ebenfalls nicht dargestellt) eingreift.

Sobald die Krallen des ersten Teilbereichs 7a der ersten Arretierungsvorrichtung 4a in die Öffnungen des Lochelements 6 eingreifen, muss im Wesentlichen keine Kraft in Z-Richtung mehr aufgebracht werden, um das Element der Flugzeuginnenausstattung 2 zu halten bzw. zu tragen. Das Gewicht des Elementes 2 wird im eingebrachten Zustand im Wesentlichen vollständig über die erste Fixierungsvorrichtung 3a an die Flugzeugstruktur bzw. den Flugzeugrumpf 1 weitergegeben.

Die Krallen der ersten Arretierungsvorrichtung 4a positionieren damit das Element der Flugzeuginnenausstattung 2 im Wesentlichen eindeutig, ermöglichen das Verschwenken desselben um einen definierten Punkt bzw. eine definierte Achs und stellen im Weiteren auch sicher, dass das Element 2 definiert mit der zweiten Arretierungsvorrichtung 4b in die zweite Fixierungsvorrichtung 3b eingreift.

Somit ist eine schnelle, eindeutig bestimmte und definierte Befestigung des Elementes der Flugzeuginnenausstattung 2 an der Flugzeugstruktur bzw. dem Flugzeugrumpf 1 möglich.
Die Erfindung beschränkt sich in ihren Ausführungen nicht auf die in den Figuren dargestellten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "aufweisend" oder "umfassend" keine anderen Elemente oder Schritte ausschließen und dass "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- 1: Flugzeugstruktur/Flugzeugrumpf
- 2: Element der Flugzeuginnenausstattung
- 3a,b: erste, zweite Fixierungsvorrichtung
- 4a,b: erste, zweite Arretierungsvorrichtung
- 5a,b: T-Element
- 6: Lochelement
- 7a,b: erster bzw. zweiter Teilbereich
- 8: Riegelelement
- 9a-d: Kraftelement
- 10: Bewegungsmöglichkeit
- 11: Gehäuse
- 12a,b: erste, zweite Gehäuseöffnung
- 13: Arretierungselement
- 14: Auslöseelement
- 15: Sicherungselement
- 16: Nut
- 17: Schiebeelement
- 17a: Stirnteil des Schiebeelements
- 18: Entriegelungselement
- 19: Nase
- 20: Öffnung
- 21: Befestigungselement
- 22: Aussparung
- 23a: Schwenkbewegung Befestigung
- 23b: Schwenkbewegung entfernen

## Patentansprüche

1. Arretierungsvorrichtung (4a,b) zum lösbaren Verbinden einer ersten Komponente mit einer zweiten Komponente in einem Flugzeug, die Arretierungsvorrichtung (4a,b) aufweisend:
ein Arretierungselement (13), befestigbar an einer ersten Komponente;
ein Auslöseelement (14); sowie
ein Sicherungselement (15);
wobei das Arretierungselement (13) durch das Auslöseelement (14) in einem ersten Zustand lösbar festlegbar ist;
wobei das Arretierungselement (13) durch das Sicherungselement (15) in einem zweiten Zustand lösbar festlegbar ist;
**dadurch gekennzeichnet, dass**
durch die Betätigung des Auslöseelementes (14) das Arretierungselement (13) vom ersten Zustand in den zweiten Zustand überführbar ist; und
durch Betätigen des Sicherungselementes (15) das Arretierungselement (13) vom zweiten Zustand in den ersten Zustand überführbar ist.

2. Vorrichtung nach Anspruch 1, weiterhin aufweisend:
ein Gehäuse (11);
wobei das Gehäuse (11) eine erste Öffnung (12a) aufweist, durch welche erste Öffnung (12a) eine erste Fixierungsvorrichtung (3a), befestigbar an der zweiten Komponente, in die Arretierungsvorrichtung (4a,b) einbringbar ist;
wobei durch das Einbringen der ersten Fixierungsvorrichtung (3a) in die Arretierungsvorrichtung (4a,b) das Arretierungselement (13) vom ersten Zustand in den zweiten Zustand überführbar ist; und
wobei im zweiten Zustand die erste Fixierungsvorrichtung (3a) und die Arretierungsvorrichtung (4a,b) relativ zueinander festlegbar sind.

3. Vorrichtung nach Anspruch 2,
wobei durch das Einbringen der ersten Fixierungsvorrichtung (3a) in die Arretierungsvorrichtung (4a,b) das Auslöseelement (14) betätigbar ist, so dass das Arretierungselement (13) vom ersten Zustand in den zweiten Zustand überführt wird.

4. Vorrichtung nach einem der Ansprüche 2 oder 3, das Gehäuse (11) weiterhin aufweisend:
eine zweite Öffnung (12b), wobei
durch die zweite Öffnung (12b) ein Entriegelungselement in die Arretierungsvorrichtung (4a,b) einbringbar ist; wobei durch das Einbringen des Entriegelungselementes in die Arretierungsvorrichtung (4a,b) das Arretierungselement (13) vom zweiten Zustand in den ersten Zustand überführbar ist; und
wobei im ersten Zustand die erste Fixierungsvorrichtung (3a) und die Arretierungsvorrichtung (4a,b) relativ zueinander frei bewegbar sind.

5. Vorrichtung nach einem der vorhergehenden Ansprüche, weiterhin aufweisend
zumindest ein Kraftelement (9a,b,c,d), angeordnet an zumindest einem der Elemente aus der Gruppe bestehend aus Arretierungselement, Auslöseelement, Sicherungselement und Riegelelement, wobei das zumindest eine Kraftelement (9a,b,c,d) das zumindest eine Element in einem der ersten und zweiten Zustände lösbar festlegt.

6. Befestigungssystem zum Befestigen eines Elementes einer Flugzeuginnenausstattung (2) an einer Flugzeugstruktur (1), das Befestigungssystem aufweisend:
ein Element einer Flugzeuginnenausstattung (2);
eine erste Arretierungsvorrichtung (4a) nach einem der Anspruche 1 bis 5, welche fest mit dem Element der Flugzeuginnenausstattung (2) oder der Flugzeugstruktur (1) gekoppelt ist;
eine zweite Arretierungsvorrichtung (4b), welche fest mit dem Element der Flugzeuginnenausstattung (2) oder der Flugzeugstruktur (1) gekoppelt ist;
eine erste Fixierungsvorrichtung (3a), welche mit der ersten Arretierungsvorrichtung (4a) korrespondiert und fest mit der Flugzeugstruktur (1) oder dem Element der Flugzeuginnenausstattung (2) gekoppelt ist; und eine zweite Fixierungsvorrichtung (3b), welche mit der zweiten Arretierungsvorrichtung (4b) korrespondiert und fest mit der Flugzeugstruktur (1) oder dem Element der Flugzeuginnenausstattung (2) gekoppelt ist; wobei
die erste Arretierungsvorrichtung (4a) und die erste Fixierungsvorrichtung (3a) lösbar fest koppelbar sind; wobei
die zweite Arretierungsvorrichtung (4b) und die zweite Fixierungsvorrichtung (3b) lösbar fest koppelbar sind; wobei
zumindest eine der ersten und der zweiten Arretierungsvorrichtung (4a,b) einen ersten Teilbereich (7a), welcher erste Teilbereich (7a) mit der ersten bzw. zweiten Fixierungsvorrichtung (3a,b) koppelbar ist, und einen zweiten Teilbereich (7b), welcher zweite Teilbereich (7b) mit dem Element der Flugzeuginneneinrichtung (2) fest verbindbar ist, aufweist, und wobei die zumindest eine der ersten und der zweiten Arretierungsvorrichtung (4a,b), aufweisend den ersten und zweiten Teilbereich (7a,b), ausgebildet ist, das Element der Flugzeuginnenausstattung (2) relativ zu der ersten bzw. zweiten Fixierungsvorrichtung (3a,b) zu verschwenken.

7. Befestigungssystem nach Anspruch 6, wobei der erste Teilbereich (7a) relativ zum zweiten Teilbereich (7b) beweglich ausgebildet ist.

8. Befestigungssystem nach Anspruch 6 oder 7, wobei
die zweite Arretierungsvorrichtung (4b) in dem ersten Teilbereich (7a) als eine Arretierungsvorrichtung (4a,b) nach einem der Anspruche 1 bis 5 ausgebildet ist.

9. Befestigungssystem nach Anspruch 6 oder 7; wobei
die zweite Arretierungsvorrichtung (4b) in dem ersten Teilbereich (7a) ein Riegelelement (8) aufweist, welches Riegelelement (8) die zweite Arretierungsvorrichtung (4b) und die zweite Fixierungsvorrichtung (3b) lösbar fest verkoppelt.

10. Befestigungssystem nach Anspruch 9; wobei
zumindest ein Kraftelement (9a,b,c,d) an dem Riegelelement (8) angeordnet ist; wobei das Kraftelement (9a,b,c,d) das Riegelelement (8) in einem die zweite Arretierungsvorrichtung (4b) und die zweite Fixierungsvorrichtung (3b) verriegelndem Zustand lösbar festlegt.

11. Befestigungssystem nach einem der Ansprüche 6 bis 10; wobei
der erste Teilbereich (7a) relativ zum zweiten Teilbereich (7b) beweglich ausgebildet ist unter Verwendung zumindest eines Elementes aus der Gruppe bestehend aus Drehgelenk, Schubgelenk, Kurvengelenk, Schraubengelenk, Drehschubgelenk, Kugelgelenk und Plattengelenk.

12. Befestigungssystem nach einem der Ansprüche 6 bis 11, wobei
das Element der Flugzeuginnenausstattung (2) relativ zur Flugzeugstruktur (1) in einem befestigten Zustand, in welchem befestigten Zustand jeweils eine der ersten und der zweiten Arretierungsvorrichtungen (4a,b) mit jeweils einer der ersten und der zweiten Fixierungsvorrichtungen (3a,b) gekoppelt ist, im Wesentlichen spielfrei befestigbar ist.

13. Flugzeug mit einem Befestigungssystem nach einem der Ansprüche 6 bis 12.

14. Verwendung eines Befestigungssystems nach einem der Ansprüche 6 bis 12 in einem Flugzeug.

15. Verfahren zum Befestigen eines Elementes einer Flugzeuginnenausstattung (2) an einer tragenden Struktur in einem Flugzeug (1), aufweisend die Schritte:
Verbinden des Elementes der Flugzeuginnenausstattung (2) unter Verwendung einer ersten Arretierungsvorrichtung (4a) gemäß einem der Ansprüche 1 bis 5 an einer ersten Fixierungsvorrichtung (3a);
Verschwenken des Elementes der Flugzeuginnenausstattung (2) relativ zur tragenden Struktur (1); und
Verbinden des Elementes der Flugzeuginnenausstattung (2) unter Verwendung einer zweiten Arretierungsvorrichtung (4b) gemäß einem der Ansprüche 1 bis 5 an einer zweiten Fixierungsvorrichtung (3b), wodurch das Element der Flugzeuginnenausstattung (2) relativ zur tragenden Struktur festgelegt wird.

16. Verfahren nach Anspruch 15, weiter aufweisend die Schritte:
automatisches, lösbares Verriegeln der erste Arretierungsvorrichtung (4a) bei Anbringen an der ersten Fixierungsvorrichtung (3a);
automatisches, lösbares Verriegeln der zweiten Arretierungsvorrichtung (4b) bei Anbringen an der zweiten Fixierungsvorrichtung (3b) durch Einbringen der zweiten Fixierungsvorrichtung (3b) in die zweite Arretierungsvorrichtung (4b); und
automatisches, lösbares Sichern zumindest einer der ersten und der zweiten Arretierungsvorrichtung (4a,b) in ihrem verriegelten Zustand unter Verwendung eines Sicherungselementes (15).

17. Verfahren zum Entfernen eines Elementes einer Flugzeuginnenausstattung (2) von einer tragenden Struktur in einem Flugzeug (1), aufweisend die Schritte:
manuelles Lösen einer ersten oder einer zweiten Arretierungsvorrichtung (4a,b) gemäß einem der Ansprüche 1 bis 5;
Verschwenken des Elementes der Flugzeuginnenausstattung (2) relativ zur tragenden Struktur (1); und
manuelles Lösen der verbleibenden zweiten oder ersten Arretierungsvorrichtung (4b,a) gemäß einem der Ansprüche 1 bis 5.

18. Verfahren nach Anspruch 17, weiter aufweisend die Schritte:
manuelles Entriegeln des Sicherungselementes (15) der ersten oder zweiten Arretierungsvorrichtung (4a,b);
manuelles Entriegeln des Arretierungselementes (13) dieser ersten oder zweiten Arretierungsvorrichtung (4a,b) durch Einbringen eines Entriegeltungselementes in diese erste oder zweite Arretierungsvorrichtung (4a,b); und
manuelles Entriegeln des Riegelelementes (8) der verbleibenden zweiten oder ersten Arretierungsvorrichtung (4b,a).

## Claims

1. A latching device (4a,b) for detachably connecting a first component with a second component in an aircraft, wherein the latching device (4a,b) comprises:
a latching element (13) attachable to a first component;
a trigger element (14); and
a safeguard element (15);
wherein the latching element (13) is detachably securable in a first state by employing the trigger element (14);
wherein the latching element (13) is detachably securable in a second state by employing the safeguard element (15);
**characterized in that** the latching element (13) is movable from the first state to the second state by activating the trigger element (14), and
the latching element (13) is movable from the second state to the first state by activating the safeguard element (15).

2. The device according to claim 1, further comprising:
a housing (11);
wherein the housing (11) has a first opening (12a), and a first fixation device (3a) securable to the second component may be introduced into the latching device (4a,b) through the first opening (12a);
wherein by introducing the first fixation device (3a) into the latching device (4a,b) the latching element (13) is movable from the first state to the second state; and
wherein the first fixation device (3a) and the latching device (4a,b) are fixable relative to each other in the second state.

3. The device according to claim 2,
wherein by introducing the first fixation device (3 a) into the latching device (4a,b) the trigger element (14) is actuatable, such that the latching element (13) is moved from the first state to the second state.

4. The device according to one of claims 2 or 3, the housing (11) further comprising:
a second opening (12b),
wherein an unlatching element is introducible into the latching device (4a,b) through the second opening;
wherein the latching element (13) is movable from the second state to the first state by introducing the unlatching element into the latching device (4a,b); and
wherein the first fixation device (3a) and the latching device (4a,b) are movable freely relative to each other in the first state.

5. The device according to one of the preceding claims, further comprising:
at least one force element (9a,b,c,d) arranged at at least one of the elements from the group comprising a latching element, a trigger element, a safeguard element, and a locking element, wherein the at least one force element (9a,b,c,d) detachably secures the at least one element in one of the first and second states.

6. An attachment system for attaching an aircraft interior fitting element (2) to an aircraft structure (1), the attachment system comprising:
an aircraft interior fitting element (2);
a first latching device (4a) according to one of claims 1 to 5, which is rigidly coupled with the aircraft interior fitting element (2) or the aircraft structure (1);
a second latching device (4b), which is rigidly coupled with the aircraft interior fitting element (2) or the aircraft structure (1);
a first fixation device (3a), which corresponds with the first latching device (4a) and which is rigidly coupled with the aircraft structure (1) or the aircraft interior fitting element (2); and a second fixation device (3b), which corresponds with the second latching device (4b) and which is rigidly coupled with the aircraft structure (1) or the aircraft interior fitting element (2);
wherein the first latching device (4a) and the first fixation device (3a) are rigidly detachably couplable;
wherein the second latching device (4b) and the second fixation device (3b) are rigidly detachably couplable;
wherein at least one of the first and second latching devices (4a,b) has a first partial region (7a), which first partial region (7a) is couplable with the first or second fixation device (3a,b), and a second partial region (7b), which second partial region (7b) is rigidly connectable with the aircraft interior fitting element (2), and wherein the at least one of the first and second latching devices (4a,b), comprising the first and second partial region (7a,b), is adapted to pivot the aircraft interior fitting element (2) relative to the first and second fixation device (3a,b).

7. The attachment system according to claim 6, wherein the first partial region (7a) is adapted to be movable relative to the second partial region (7b).

8. The attachment system according to claim 6 or 7, wherein the second latching device (4b) is adapted as a latching device (4a,b) according to one of claims 1 to 5 in the first partial region (7a).

9. The attachment system according to claim 6 or 7, wherein the second latching device (4b) has a locking element (8) in the first partial region (7a), which locking element (8) couples the second latching device (4b) and the second fixation device (3b) in a detachably rigid manner.

10. The attachment system according to claim 9, wherein at least one force element (9a,b,c,d) is arranged at the locking element (8); wherein the force element (9a,b,c,d,) detachably secures the locking element (8) in a state that latches the second latching device (4b) and the second fixation device (3b).

11. The attachment system according to one of claims 6 to 10, wherein the first partial region (7a) is adapted to be movable relative to the second partial region (7b) by employing at least one element from the group comprising a hinge joint, a sliding joint, a curved joint, a screw joint, a sliding-hinge joint, a ball joint and a plate joint.

12. The attachment system according to one of claims 6 to11, wherein the aircraft interior fitting element (2) is securable to the aircraft structure (1) substantially free of play in an attached state, wherein a respective one of the first and second latching devices (4a,b) is coupled with a respective one of the first and second fixation devices (3a,b) in this attached state.

13. An aircraft with an attachment system according to one of claims 6 to 12.

14. Use of an attachment system according to one of claims 6 to 12 in an aircraft.

15. A method for attaching an aircraft interior fitting element (2) to a load-bearing structure in an aircraft (1), comprising the steps of:
connecting the aircraft interior fitting element (2) to a first fixation device (3a) by employing a first latching device (4a) according to one of claims 1 to 5;
pivoting the aircraft interior fitting element (2) relative to the load-bearing structure (1); and
connecting the aircraft interior fitting element (2) to a second fixation device (3b) by employing a second latching device (4b) according to one of claims 1 to 5, such that the aircraft interior fitting element (2) is fixed relative to the load-bearing structure.

16. The method according to claim 15, further comprising the steps of:
automatically, detachably latching the first latching device (4a) during attachment to the first fixation device (3a);
automatically, detachably latching the second latching device (4b) during attachment to the second fixation device (3b) by introducing the second fixation device (3b) into the second latching device (4b); and
automatically, detachably securing at least one of the first and second latching devices (4a,b) in its locked state by employing a safeguard element (15).

17. A method for removing an aircraft interior fitting element (2) from a load-bearing structure in an aircraft (1), comprising the steps of:
manually detaching a first or second latching device (4a,b) according to one of claims 1 to 5;
pivoting the aircraft interior fitting element (2) relative to the load-bearing structure (1); and
manually detaching the remaining second or first latching device (4b,a) according to one claims 1 to 5.

18. The method according to claim 17, further comprising the steps of:
manually unlatching the safeguard element (15) of the first or second latching device (4a,b);
manually unlatching the latching element (13) of this first or second latching device (4a,b) by introducing an unlatching element into this first or second latching device (4a,b); and
manually unlatching the locking element (8) of the remaining second or first latching device (4b,a).

## Revendications

1. Dispositif de blocage (4a,b) destiné à relier de manière détachable un premier composant à un second composant dans un avion, le dispositif de blocage (4a,b) présentant :
un élément de blocage (13) qui peut être fixé à un premier composant ;
un élément de désengagement (14) ; et
un élément de sécurité (15) ;
l'élément de blocage (13) pouvant être fixé de manière détachable dans un premier état par l'intermédiaire de l'élément de désengagement (14) ;
l'élément de blocage (13) pouvant être fixé de manière détachable dans un second état par l'intermédiaire de l'élément de sécurité (15) ;
**caractérisé en ce que**
l'actionnement de l'élément de désengagement (14) permet à l'élément de blocage (13) d'être transféré du premier état dans le second état ; et
l'actionnement de l'élément de sécurité (15) permet à l'élément de blocage (13) d'être transféré du second état dans le premier état.

2. Dispositif selon la revendication 1, présentant en outre :
un boîtier (11) ;
le boîtier (11) présentant une première ouverture (12a), et à travers cette première ouverture (12a) un premier moyen de fixation (3a), qui peut être fixé au second composant, peut être engagé dans le dispositif de blocage (4a,b) ;
l'engagement du premier moyen de fixation (3a) dans le dispositif de blocage (4a,b) permettant à l'élément de blocage (13) d'être transféré du premier état dans le second état ; et
dans le second état, le premier moyen de fixation (3a) et le dispositif de blocage (4a,b) pouvant être fixés l'un par rapport à l'autre.

3. Dispositif selon la revendication 2,
dans lequel l'engagement du premier moyen de fixation (3a) dans le dispositif de blocage (4a,b) permet à l'élément de désengagement (14) d'être actionné de telle sorte que l'élément de blocage (13) soit transféré du premier état dans le second état.

4. Dispositif selon une des revendications 2 ou 3, le boîtier (11) présentant en outre :
une seconde ouverture (12b),
la seconde ouverture (12b) permettant à un élément de déverrouillage d'être engagé dans le dispositif de blocage (4a,b) ;
l'engagement de l'élément de déverrouillage dans le dispositif de blocage (4a,b) permettant à l'élément de blocage (13) d'être transféré du second état dans le premier état ; et
dans le premier état, le premier moyen de fixation (3a) et le dispositif de blocage (4a,b) étant mobiles librement l'un par rapport à l'autre.

5. Dispositif selon une des revendications précédentes, présentant en outre :
au moins un élément de force (9a,b,c,d), disposé sur au moins un élément du groupe composé de l'élément de blocage, l'élément de désengagement, l'élément de sécurité et un élément de verrouillage,
l'au moins un élément de force (9a,b,c,d) fixant de manière détachable l'au moins un élément dans l'un des premier et second états.

6. Système de fixation destiné à fixer un élément d'un équipement intérieur d'avion (2) sur une structure d'avion (1), le système de fixation présentant :
un élément d'un équipement intérieur d'avion (2) ;
un premier dispositif de blocage (4a) selon une des revendications 1 à 5, qui est solidaire de l'élément de l'équipement intérieur d'avion (2) ou de la structure d'avion (1) ;
un second dispositif de blocage (4b), qui est solidaire de l'élément de l'équipement intérieur d'avion (2) ou de la structure d'avion (1) ;
un premier moyen de fixation (3a), qui correspond au premier dispositif de blocage (4a) et est solidaire de la structure d'avion (1) ou de l'élément de l'équipement intérieur d'avion (2) ; et
un second moyen de fixation (3b), qui correspond au second dispositif de blocage (4b) et est solidaire de la structure d'avion (1) ou de l'élément de l'équipement intérieur d'avion (2) ;
le premier dispositif de blocage (4a) et le premier moyen de fixation (3a) pouvant être solidaires de manière détachable ;
le second dispositif de blocage (4b) et le second moyen de fixation (3b) pouvant être solidaires de manière détachable ;
au moins un des premier et second dispositifs de blocage (4a,b) présentant une première zone partielle (7a), cette première zone partielle (7a) pouvant être couplée au premier, respectivement second, moyen de fixation (3a,b), et une seconde zone partielle (7b), cette seconde zone partielle (7b) pouvant être solidaire de l'élément de l'équipement intérieur d'avion, et
et l'au moins un des premier et second dispositifs de blocage (4a,b), présentant la première et la seconde zones partielles (7a,b), étant réalisé pour faire pivoter l'élément de l'équipement intérieur d'avion (2) par rapport au premier, respectivement, second moyen de fixation (3a,b).

7. Système de fixation selon la revendication 6, dans lequel la première zone partielle (7a) est réalisée mobile par rapport à la seconde zone partielle (7b).

8. Système de fixation selon la revendication 6 ou 7, dans lequel
le second dispositif de blocage (4b) est réalisé dans la première zone partielle (7a) sous la forme d'un dispositif de blocage (4a,b) selon une des revendications 1 à 5.

9. Système de fixation selon la revendication 6 ou 7, dans lequel
le second dispositif de blocage (4b) présente un élément de verrouillage (8) dans la première zone partielle (7a), cet élément de verrouillage (8) rendant solidaire de manière détachable le second dispositif de blocage (4b) et le second moyen de fixation (3b).

10. Système de fixation selon la revendication 9, dans lequel
au moins un élément de force (9a,b,c,d) est disposé sur l'élément de verrouillage (8) ;
l'élément de force (9a,b,c,d) fixant de manière détachable l'élément de verrouillage (8) dans un état verrouillant le second dispositif de blocage (4b) et le second moyen de fixation (3b).

11. Système de fixation selon une des revendications 6 à 10, dans lequel
la première zone partielle (7a) est réalisée mobile par rapport à la seconde zone partielle (7b) en utilisant au moins un élément du groupe composé d'un raccord articulé, d'un raccord coulissant, d'un raccord courbé, d'un raccord vissé, d'un raccord coulissant articulé, d'un raccord sphérique et d'un raccord à plaque.

12. Système de fixation selon une des revendications 6 à 11, dans lequel
l'élément de l'équipement intérieur d'avion (2) peut être fixé sensiblement sans jeu dans un état fixé par rapport à la structure d'avion (1), et dans cet état fixé chacun des premier et second dispositifs de blocage (4a,b) étant couplé à chacun des premier et second moyens de fixation (3a,b).

13. Avion comprenant un système de fixation selon une des revendications 6 à 12.

14. Utilisation d'un système de fixation selon une des revendications 6 à 12 dans un avion.

15. Procédé de fixation d'un élément d'un équipement intérieur d'avion (2) sur une structure porteuse dans un avion (1), présentant les étapes:
relier l'élément de l'équipement intérieur d'avion (2) en utilisant un premier dispositif de blocage (4a) selon une des revendications 1 à 5 sur un premier moyen de fixation (3a) ;
faire pivoter l'élément de l'équipement intérieur d'avion (2) par rapport à la structure porteuse (1) ; et
relier l'élément de l'équipement intérieur d'avion (2) en utilisant un second dispositif de blocage (4b) selon une des revendications 1 à 5 sur un second moyen de fixation (3b), ce qui permet de fixer l'élément de l'équipement intérieur d'avion (2) par rapport à la structure porteuse.

16. Procédé selon la revendication 15, présentant en outre les étapes consistant à :
verrouiller de manière automatique et détachable le premier dispositif de blocage (4a) lors de l'application sur le premier moyen de fixation (3a) ;
verrouiller de manière automatique et détachable le second dispositif de blocage (4b) lors de son application sur le second moyen de fixation (3b) en engageant le second moyen de fixation (3b) dans le second dispositif de blocage (4b) ; et
sécuriser de manière automatique et détachable au moins un des premier et second dispositifs de blocage (4a,b) dans son état verrouillé en utilisant un élément de sécurité (15).

17. Procédé d'enlèvement d'un élément d'un équipement intérieur d'avion (2) d'une structure porteuse dans un avion (1), présentant les étapes:
détacher manuellement un premier ou second dispositif de blocage (4a,b) selon une des revendications 1 à 5 ;
faire pivoter l'élément de l'équipement intérieur d'avion (2) par rapport à la structure porteuse (1) ; et
détacher manuellement le second ou premier dispositif de blocage restant (4b,a) selon une des revendications 1 à 5.

18. Procédé selon la revendication 17, présentant en outre les étapes:
déverrouiller manuellement l'élément de sécurité (15) du premier ou second dispositif de blocage (4a,b) ;
déverrouiller manuellement l'élément de blocage (13) de ce premier ou second dispositif de blocage (4a,b) en engageant un élément de déverrouillage dans ce premier ou second dispositif de blocage (4a,b) ; et
déverrouiller manuellement l'élément de verrouillage (8) du second ou premier dispositif de blocage restant (4b,a).
